# EUROPEAN PATENT SPECIFICATION

(11) **EP 2 554 359 B1**
(45) Date of publication and mention of the grant of the patent: **14.01.2015**
(21) Application number: 11765435.0
(22) Date of filing: 25.03.2011
(51) Int. Cl.: B29C 63/34, F16L 1/00, F16L 55/16

(54) **LINING MATERIAL FOR REHABILITATING EXISTING PIPE AND METHOD FOR REHABILITATING EXISTING PIPE USING SAME**
VERKLEIDUNGSMATERIAL ZUR SANIERUNG EINER VORHANDENEN RÖHRE UND VERFAHREN ZUR SANIERUNG EINER VORHANDENEN RÖHRE DAMIT
MATÉRIAU DE REVÊTEMENT PERMETTANT DE RÉHABILITER UN TUYAU EXISTANT ET PROCÉDÉ PERMETTANT DE RÉHABILITER UN TUYAU EXISTANT EN UTILISANT CELUI-CI

(30) Priority: 02.04.2010 JP 2010086403
(43) Date of publication of application: 06.02.2013
(73) Proprietor: Sekisui Chemical Co., Ltd., Osaka-shi, Osaka 530-8565 (JP)
(72) Inventor: KOBAYASHI Tomoyuki, Kyoto-shi Kyoto 601-8105 (JP)
(74) Representative: Hoffmann Eitle
(86) International application number: PCT/JP2011/057284
(87) International publication number: WO 2011/125534

(56) References cited:
- EP-A1- 2 141 404
- GB-A- 2 150 664
- JP-A- 2 057 323
- JP-A- 4 337 193
- JP-A- 7 052 245
- JP-A- 2008 087 442

## Description

### TECHNICAL FIELD

The present invention relates to a lining material for rehabilitating a host pipe and a method for rehabilitating a host pipe using the same, and in more detail, the present invention relates to a lining material for rehabilitating a host pipe having low viscosity and very good impregnating property, in spite of low moisture content, and a method for rehabilitating a host pipe for repairing a pipeline, by providing lining at the inner face of a deteriorated host pipe (in particular, an underground pipe) using the same.

### BACKGROUND ART

In the case of deterioration of a host pipe, for example, an underground pipe etc., such as, sewer pipe, water supply pipe, agriculture water pipe, buried in the ground, there have been proposed and practically applied various methods for rehabilitating a host pipe for repairing a pipeline, by providing lining at the inner face of the pipeline.

As one of such rehabilitation methods, there has been such a rehabilitation method for fixing, firstly by forming, in advance, a tubular lining material, where an uncured curable resin is impregnated into a tubular resin absorbing base material in which the outer surface is coated with a resin film, and then by inverting (reversing) and inserting the tubular lining material to the inside of pipeline by fluid pressure with using this tubular lining material, and then by pressing this tubular lining material to the inner wall of the pipeline to cure the curable resin being impregnated in this state, (for example, refer to PATENT LITERATURE 1).

In this type of a method, the tubular lining material is made flattened and arranged in a folded and laminated state inside a closed container, and one end thereof is bent to the exterior side to be attached at the exterior circumference of an opening end of a reversion nozzle connected to the closed container, and the lining material is reversed and inserted inside the pipeline, by exerting the fluid pressure (water pressure or air pressure) inside the closed container. Then, the lining material is heated and cured with steam or warm water, while pressing the lining material to the inner wall of the pipeline to attain lining of the inner face of the pipeline by the cured lining material.

As the curable resin to be used in the above conventional rehabilitation method, an unsaturated polyester resin or an epoxy resin is general. However, because the unsaturated polyester resin or the epoxy resin is a synthetic resin derived from petroleum as a main raw material, it cannot be said suitable as a material for repairing or rehabilitating a deteriorated host pipe, in the recent days having a problem of depletion of a petroleum resource.

On the other hand, as a non-petroleum-based curable resin, what is called a furan-based resin, made of furfuryl alcohol, alone or as a co-condensed substance, has been well known.

The furan-based resin has been used in various kinds of industrial fields as a matrix resin of a laminated body (refer to Patent Literature 3) and a composite material such as joint cement, FRP, because a cured material thereof has generally superior heat resistance, solvent resistance, and chemical resistance.

However, a conventional furan-based resin contains moisture derived from a condensation reaction in resin synthesis, and thus in using as the matrix resin of the laminated body, dimensional shrinkage of the laminated body by water emission was a large problem.

To dissolve this problem, there has been proposed a method for decreasing moisture content by removing condensation water of the furan-based resin, after completion of synthesis (refer to PATENT LITERATURE 2). However, this method increases exponentially viscosity of the furan-based resin accompanying with decrease in moisture, and made difficult to secure sufficient impregnating ability, which is indispensable as the matrix resin of the laminated body.

Further, a rehabilitation method requires strength characteristics durable to soil pressure, underground water pressure and live load, however, in the case of the furan-based resin, there was a problem that impregnation into a base material becomes difficult in trying to enhance strength characteristics by the addition of a filler, because of excessive increase in viscosity of the furan resin composition.

Under such circumstances, development of the lining material for rehabilitating a host pipe, having low viscosity and very good impregnating property, in spite of low moisture content, has been desired, which dissolves problems that the rehabilitation method using the conventional furan-based resin had.

### CITATION LIST

### PATENT LITERATURE

PATENT LITERATURE 1: JP-A-2003-165158
PATENT LITERATURE 2: JP No. 3219769
Patent Literature 3: EP 2 141 404 A1

### SUMMARY OF THE INVENTION

### TECHNICAL PROBLEM

In view of the above conventional technological problems, it is an object of the present invention to provide the lining material for rehabilitating a host pipe composed of a curable resin to substitute a petroleum-based synthetic resin, as well as to provide the lining material for rehabilitating a host pipe, having low viscosity and very good impregnating property, in spite of low moisture content, and also to provide the lining material for rehabilitating a host pipe having high strength characteristics while having good impregnating ability, still more, to provide the lining material for rehabilitating a host pipe, where a base material is also composed of a non-petroleum-based material, or to provide the method for rehabilitating a host pipe having good quality and low cost, which is capable of providing the work efficiently and conveniently by using such a lining material.

### SOLUTION TO PROBLEM

The present inventor has intensively studied a way to solve the above-described problems and discovered that such one that is obtained by impregnating a curable furan resin composition containing a furan-based resin and a curing agent, to a resin absorbing base material in which one surface is liquid-tightly film coated, was prepared, and used it as the lining material for rehabilitating a host pipe, and as a result it facilitated to solve the above-described problems, and have completed the present invention based on this knowledge.

That is, according to first aspects of the present invention, there is provided a lining material for rehabilitating a host pipe according to any one of claims 1 to 11. According to second aspects of the present invention, there is provided a method for rehabilitating a host pipe by inserting a tubular lining material into a host pipe according to any one of claims 12 to 23.

### ADVANTAGEOUS EFFECTS OF INVENTION

According to the lining material for rehabilitating a host pipe of the present invention, or the method for rehabilitating a host pipe using the same, because the curable resin is a furan-based resin derived from a biomass resource such as corncob · sugar cane bagasse · wheat straw, as a main raw material, it is able to tackle depletion of a petroleum resource, as well as immobilize carbon dioxide absorbed by a plant, as a life line to be used for a relatively long period of time, or attain what is called a carbon-neutral state, which only release carbon dioxide absorbed by a plant, into atmosphere, in also disposal and incineration.

In addition, because the lining material of the present invention attains both low viscosity and low moisture content, and still more to give also high strength characteristics, in a curable furan resin composition, it is possible to provide a thin thickness lining material having small shrinkage in curing, while maintaining high strength, efficiently and conveniently for the work, as well as the method for rehabilitating a host pipe having good quality and low cost.

### BRIEF DESCRIPTION OF DRAWINGS

Fig. 1 is a partial cross-sectional view of one example of a lining material of the present invention (a second aspect).
Fig. 2 is a cross-sectional view of one example of a tubular lining material in a non-impregnated state.
Fig. 3 is a cross-sectional view of one example of an embodiment where the lining material of the present invention, impregnated with the lining material of Fig. 2, is inverted to dispose inside a host pipe.
Fig. 4 is a cross-sectional view of one example of the lining material of the present invention in a state unified to the inner wall of a host pipe with extended diameter inside the host pipe.
Fig. 5 is an explanation drawing showing one step of a method for rehabilitating a host pipe.
Fig. 6 is an explanation drawing showing one step of a method for rehabilitating a host pipe.

### DESCRIPTION OF EMBODIMENTS

The lining material for rehabilitating a host pipe of the present invention (hereafter may also be referred to as "the present lining material") is such one as obtained by impregnating the curable furan resin composition containing a furan-based resin and a curing agent, to the resin absorbing base material in which one surface is liquid-tightly film coated (hereafter may also be referred to as "a first aspect"), or such one as obtained by impregnating the curable furan resin composition containing a furan-based resin and a curing agent, to the resin absorbing base material in which one surface is liquid-tightly film coated, another resin absorbing base material, and a reinforced fiber base material interposed between them (hereafter may also be referred to as "a second aspect").

In the present lining material, it is preferable that a resin absorbing base material has a porosity of 90% or less, preferably 10 to 90%, because sure impregnation of a curable resin becomes possible, resulting in suppressing a forming trouble of a void or the like in the resin absorbing base material after curing, to the minimal, and in addition, it is preferable that wall thickness is 3 mm or larger and preferably 4 mm or larger, because sufficient protection characteristics can be fulfilled.

The resin absorbing base material may be any material, as long as it is a base material impregnable of a curable resin, however, as the resin absorbing base material, for example, nonwoven fabric, a chopped strand mat or the like is used.

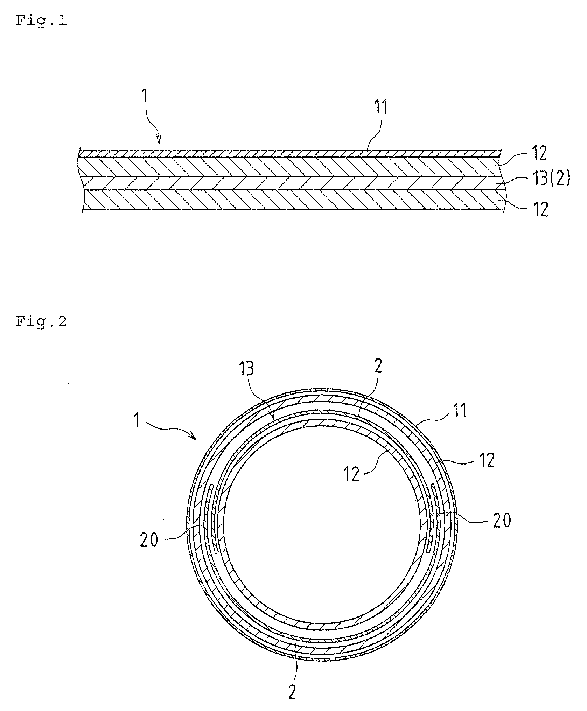

In addition, as the resin absorbing base material, any of a structural form of a single layer or a multiple layer composed of different materials may be used, and in the case of the single layer, it is preferable to make a sheet-like base material composed of nonwoven fabric or the chopped strand mat to a cylindrical shape, while in the case of the multiple layer, as will be shown in Fig. 1 to be described later, it is preferable that a fiber reinforcing base material layer is formed by interposing between nonwoven fabrics overlapped in two layers.

As a material of non-woven fabric, the one having high strength and high elasticity such as, for example, polyester, high density polyethylene (HDPE), polypropylene, is preferable, and among them, resin is preferable, as well as felt, mat, non-woven fabric, web or the like, provided with a continuous filament or a staple fiber having flexibility and porosity, may also be used.

As the chopped strand mat, such one or the like is preferable where a strand of, for example, glass fiber or the like is cut to a constant length, dispersed in a mat state, then pressure sensitive adhesives or adhesives of a thermoplastic resin or the like is furnished uniformly for thermal fusion, and strands themselves are adhered to make a mat. The chopped strand mat is capable of providing a higher strength resin absorbing base material layer, as compared with the case of using resin nonwoven fabric.

Use of natural fiber as the resin absorbing base material is preferable because of the lining material for rehabilitating a host pipe as a whole becomes a non-petroleum-based material. As natural fiber to be used in the resin absorbing base material, fiber made of cotton, ramie, flax, jute, kenaf or the like may be exemplified, however, ramie and flax are particularly preferable in view of impregnating ability of a resin, processability and supply stability.

As the resin absorbing base material, such one is preferable that, in the case of a single layer, one surface thereof, and in the case of a multiple layer, one surface of either layer thereof is coated liquid-tightly with a film, and specifically such one where one surface is adhered with a water impermeable film to form a water impermeable layer at one surface. This water impermeable layer may be formed, for example, by coating the resin absorbing base material with a synthetic resin-based material such as polyethylene, polypropylene, nylon, polyester, polyvinyl chloride, elastomer, synthetic rubber, in a state of a form of a film material or a sheet material with a thickness of about 0.2 to 2.0 mm.

As a material of the reinforced fiber base material, glass fiber, carbon fiber, aramid fiber, inorganic fiber, organic fiber, whisker or the like is preferable, and among them, glass fiber is preferable in view of balance of strength and price of the obtained fiber reinforced resin layer. In addition, such one is preferable that has a diameter of the reinforced fiber in a range of 3 to 25 µm, and such one is more preferable that has a fiber diameter in a range of 5 to 20 µm in view of strength and price.

Use of natural fiber as the reinforced fiber base material is preferable because the lining material for rehabilitating a host pipe becomes a non-petroleum-based material, as a whole. As natural fiber to be used in the resin absorbing base material, a fiber made of cotton, Manila hemp, sisal hemp, bamboo or the like may be exemplified, however, bamboo is particularly preferable in view of strength and supply stability.

In the present lining material, it is preferable that the curable furan resin composition impregnated in the resin absorbing base material is consisted of a furan-based resin and a curing agent, and has a pot life of usually 2 hours or longer, preferably 5 hours or longer and still more preferably 12 hours or longer, to secure working time of impregnation of said resin composition, the reversion step or the installing step of the present lining material.

As viscosity of the curable furan resin composition, viscosity at 25°C is usually 50 to 3000 mPa·s, preferably 100 to 2000 mPa·s, and more preferably 100 to 1000 mPa·s, because too low viscosity tends to provide resin deficiency in pressing to the inner wall, while too high viscosity makes impregnation to the resin absorbing base material difficult.

As the furan-based resin, a furan resin and a modified furan resin are preferable.

A furan resin is a polymer based on furfural or furfuryl alcohol as a starting material, or a precursor (oligomer) thereof, and includes furfuryl alcohol-based, furfuryl alcohol-furfural co-condensation-based, furfuryl alcohol-aldehyde co-condensation-based, furfural-ketone co-condensation-based, furfural-phenol co-condensation-based, furfuryl alcohol-urea co-condensation-based, furfuryl alcohol-phenol co-condensation-based one, or the like.

The precursor of the furan resin includes furfuryl alcohol-based, furfuryl alcohol-furfural co-condensation-based, furfuryl alcohol-aldehyde co-condensation-based, furfural-ketone co-condensation-based, furfural-phenol co-condensation-based, furfuryl alcohol-urea co-condensation-based, furfuryl alcohol-phenol co-condensation-based one, and the like.

As the furan-based resin, any kind of the furan-based resin may be used, however, because flexibility, surface hardness or the like as well as strength or humidity resistance is included as characteristics required for a lining material, or is stably supplied industrially, furfuryl alcohol-based, or furfuryl alcohol-formaldehyde co-condensation-based one is preferable.

As the modified furan resin, for example, epoxy-modified, phenol-modified, aldehyde-modified, urea-modified or melamine-modified furan resin is included.

Moisture content of the furan-based resin is 10% or lower and particularly preferably 9% or lower, because too high value increases dimensional shrinkage by water emission in curing.

The curing agent is not especially limited, as long as it is capable of curing the furan-based resin, and includes, for example, an organic acid such as an organic sulfonic acid, an organic carboxylic acid, and an aqueous solution thereof, an inorganic acid such as hydrochloric acid, sulfuric acid, and an aqueous solution thereof.

The organic sulfonic acid includes, for example, p-toluene sulfonic acid, benzene sulfonic acid, xylene sulfonic acid, methane sulfonic acid, or the like.
The organic carboxylic acid includes, for example, malonic acid, succinic acid, maleic acid, oxalic acid, acetic acid, lactic acid, malic acid, tartaric acid, benzoic acid, citric acid, or the like.

As the curing agent, in view of satisfying both shortening of curing time and pot life, it is also preferable that a thermally reactive-type potential acid curing agent is used alone or it is used with other curing agent in combination. The thermally reactive-type potential acid curing agent is not especially limited, as long as it is difficult to react with a component contained in the furan-based resin at normal temperature, and quickly reacts by heating in curing to form an acid, however, in view of stability at normal temperature and reaction speed by heating in curing, it is preferable to contain at least any of an inorganic ammonium salt, primary amine salt, a secondary amine salt, and a tertiary amine salt, and particularly preferable to contain at least any of ammonium chloride, ammonium sulfate, ammonium nitrate, methylamine hydrochloride, dimethylamine hydrochloride, ethylamine hydrochloride, and diethylamine hydrochloride.

It is also preferable that a reactive diluent is added to the furan-based resin of the present invention, in view of viscosity adjustment or reactivity adjustment. In this case, the reactive diluent is not especially limited, as long as it has low viscosity, compatibility with a furan resin component, and reacts and solidifies in curing of the furan resin component, however, furfuryl alcohol alone, furfural alone, or a mixture of furfuryl alcohol and furfural is particularly preferable, in view of compatibility with the furan resin component or being derived from a natural substance.

Addition amount of the reactive diluents is preferably 10 to 100 parts by weight, still more preferably 10 to 90 parts by weight, and most preferably 20 to 80 parts by weight, relative to 100 parts by weight of the furan resin component, because too low amount could decrease impregnating ability into a base material, while too high amount could incur a leak in forming a laminated body, although it differs depending on kind of the reactive diluents and viscosity of the furan resin component.

It is also preferable that an inorganic filler is added to the curable furan resin composition of the present invention, in view of enhancement of strength characteristics. In that case, the inorganic filler is not especially limited, as long as it has high elastic modulus and high filling is possible, however, in view of preventing curing inhibition, the inorganic filler having a PH of 10 or lower is preferable, and specifically, glass powder, silica, talc, kaolin, mica or the like is preferable, and kaolin and talc are most preferable in view of cost.

In addition, as the inorganic filler, it is preferable to be subjected to surface treatment in view of enhancement of interfacial surface tension with the furan-based resin. In that case, a surface treatment agent is not especially limited, as long as it is capable of reacting or bonding with the inorganic filler or the furan-based resin, however, an organosilane-based surface-treatment agent is preferable because of easy bond forming, specifically, an aminosilane-based surface-treatment agent, epoxysilane-based surface-treatment agent, and acrylsilane-based surface-treatment agent are most preferable.

Addition amount of the inorganic filler is preferably 10 to 200 parts by weight, still more preferably 20 to 150 parts by weight, and most preferably 30 to 100 parts by weight, relative to 100 parts by weight of the furan-based resin, because too low amount cannot provide enhancement effect of strength characteristics, while too high amount could incur decrease in impregnating ability to a base material caused by increased viscosity, although it differs depending on viscosity of the furan-based resin.

Explanation will be given below on embodiments of the present lining material with reference to drawings.

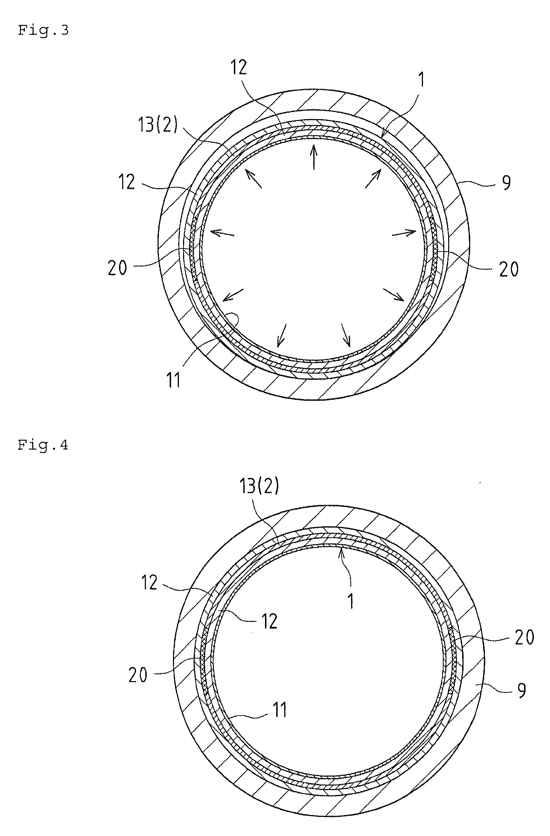

Fig. 1 is a partial cross-sectional view of the lining material relevant to one embodiment of the present invention (a second aspect), and Fig. 2 is a cross-sectional view showing one example of a non-impregnated lining material formed in tubular shape in advance. In addition, Fig. 3 is a cross-sectional view showing one example of the present lining material disposed inside a host pipe, and Fig. 4 is a cross-sectional view showing one example of the present lining material in a state of being unified to the inner wall of a host pipe with extended diameter in the host pipe.

As shown in Fig. 1, a lining material 1 has a covering layer 11 made of an impermeable material, and a resin absorbing base material layer 12, 12 installed inside the covering layer 11 and impregnated with a curable resin, and a reinforced fiber base material layer 13 impregnated with the curable resin, interposed between them.

It is preferable that this covering layer 11 is installed as a water-impermeable layer coated with a resin film material having high liquid-tightness, having water-impermeable property at the most outer layer, and is formed so as to have elasticity, flexibility or softness, enabling to follow to pipe shape of a bent part or the like of the host pipe.

As shown in Fig. 2, explanation will be given below on the case of the lining material 1, using a non-impregnated state lining material 1 formed in a tubular shape as a cylinder form which is able to respond to a circular cross-section of the host pipe 9, in advance, and impregnating a curable furan resin composition thereto as follows.

As shown in Fig. 2, in a state that the covering layer 11 is arranged at the outer surface, the curable resin is poured to the inside thereof. Next, inside of the tubular lining material 1 is depressurized to efficiently exhaust air in the resin absorbing base material layer 12 and the reinforced fiber base material layer 13, and to impregnate the curable resin to the resin absorbing base material layer 12 and the reinforced fiber base material layer 13. Space between fibers of the resin absorbing base material layer 12 and the reinforced fiber base material layer 13 acts as a deaeration route, and accordingly the curable resin flows in vacuum suction to be impregnated smoothly to the resin absorbing base material layer 12 and the reinforced fiber base material layer 13.

In this way, as shown in Fig. 3, the lining material 1 impregnated with the curable furan resin composition is drawn or inserted into the host pipe 9, and by applying pressure from inside, diameter is extended so as to closely adhere to the inner wall. And, as shown in Fig. 4, it is closely adhered to the inner wall of the host pipe 9 for lining.

As shown in Fig. 4, this lining material 1 is formed cylindrically in a four layer structure, so as to form in the order of the covering layer 11, the resin absorbing base material layer 12 impregnated with the curable resin, the reinforced fiber base material layer 13 impregnated with the curable resin, and the resin absorbing base material layer 12 impregnated with the curable resin, from the side forming the inner circumference face, when the inner face of the host pipe 9 of a repair subject, is subjected to lining. In addition, the lining material 1 has the covering layer 11 as the most outer layer, in the step before lining the inner wall of the host pipe 9, and has a form installed with, at the inside thereof, sequentially, the resin absorbing base material layer 12 impregnated with the curable resin, the reinforced fiber base material layer 13 impregnated with the curable resin, and the resin absorbing base material layer 12 impregnated with the curable resin.

As shown in Fig. 2, the above-described reinforced fiber base material layer 13 is disposed and formed, so that a plurality of pieces of sheet-like base materials 2, 2 is in an overlapped way each other. In addition, the overlapped part of the reinforced fiber base material layer 13 is arranged in an opposed way each other to form a double fiber reinforcing base material layers along a pipe axis direction. By dividedly forming the reinforced fiber base material layer 13 in this way, so as to overlap each other, it becomes possible, as shown in Fig. 3, it becomes possible to make outer diameter of the tubular lining material 1 smaller than pipe diameter of the host pipe 9 and extend diameter inside the host pipe 9, and to respond to irregularity, step difference, space or the like of the inner wall of the host pipe 9, as well as to make uniform arrangement of reinforced fiber after diameter extension, which enables to secure high pressure resistance performance and suitable strength. It should be noted that, in Fig. 3 and Fig. 4, a place shown by double hatching indicates an overlapped part 20 by sheet-like base materials 2 themselves.

The tubular lining material 1 to be formed in this way is capable of being carried to a repair subject place in sequentially stacked state, by being folded alternately in a flat shape, in rehabilitation of the host pipe 9.

Explanation will be given next on the method for rehabilitating a host pipe of the present invention (hereafter may also be referred to as the present rehabilitation method).

One aspect of the present rehabilitation method is a method for rehabilitating a host pipe by inserting a tubular lining material into a host pipe, and by rehabilitating the inner wall of a host pipe, characterized by comprising, a step for pouring and impregnating a curable furan resin composition containing a furan-based resin and a curing agent, to a resin absorbing base material in which one surface is liquid-tightly film coated, or to a resin absorbing base material in which one surface is liquid-tightly film coated, and another resin absorbing base material, and a reinforced fiber base material interposed between them, in a non-impregnated tubular lining material, a step for inserting while reversing the tubular lining material impregnated with the curable furan resin composition into the host pipe by fluid pressure, and a step for coating the inner wall of the host pipe by curing the impregnated curable furan resin composition, in a state of pressing the inserted tubular lining material to the inner wall of the host pipe.

In addition, another aspect of the present rehabilitation method is a method for rehabilitating a host pipe by inserting a tubular lining material into a host pipe, and by rehabilitating the inner wall of a host pipe, characterized by comprising, a step for pouring and impregnating a curable furan resin composition containing a furan-based resin and a curing agent, to a resin absorbing base material in which one surface is liquid-tightly film coated, or to a resin absorbing base material in which one surface is liquid-tightly film coated, and another resin absorbing base material, and a reinforced fiber base material interposed between them, in a non-impregnated tubular lining material, a step for drawing-in and inserting the tubular lining material impregnated with the curable furan resin composition into a host pipe, and a step for coating the inner wall of the host pipe by curing the impregnated curable furan resin composition, in a state of pressing the inserted tubular lining material to the inner wall of the host pipe.

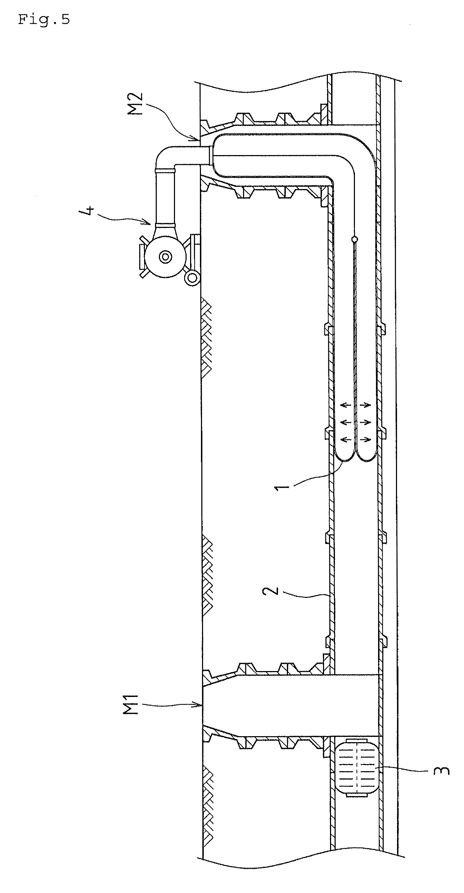

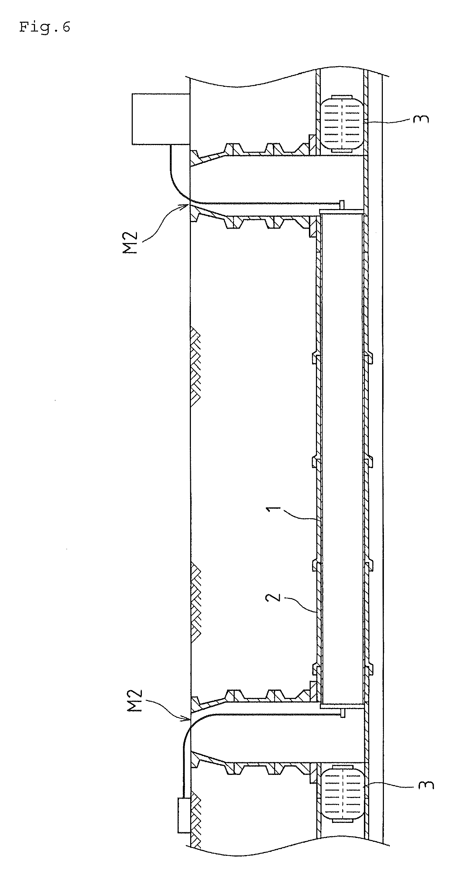

Explanation will be given below on embodiments of the method for rehabilitating a host pipe of the present invention (hereafter may also be referred to as the present rehabilitation method) with reference to Figs. 5, 6. In the present rehabilitation method, the following method is preferable in view of shortening of working time, maintaining of working environment and efficiency of a curable material.

Before the rehabilitation work of a host pipe, in the case where fluid such as sewer is present in the host pipe 9, it is preferable to remove it once from the pipe passage. As shown in Fig. 5, in a pipeline of the host pipe 9, manholes M1, M2 are installed in a suitable interval, and a dammed member 3 is installed at the upstream side of the manhole nearby. Fluid dammed is bypassed the ground through the manholes M1, M2 to be exhausted to the host pipe 9 at the downstream side. Further, the rehabilitation work inside a pipe is started, after removing a foreign material such as a deposited substance or wood pieces present in the host pipe 9, and carrying out high pressure water washing.

As shown in Fig. 5, the tubular lining material 1 is inserted into the host pipe, by mounting the tubular lining material 1 to a reversion apparatus 4 on the ground, while reversing the tubular lining material 1 (a reversion step). As the reversion apparatus, a known apparatus may be used, and the tubular lining material 1 is reversed from the tip side by being supplied pressurized fluid by the reversion apparatus, and proceeded while closely adhering to the inner wall of the host pipe, with sufficiently widened diameter by internal pressure. That is, as shown in Fig. 3, by pressurization of the reversion apparatus, in the host pipe 9, uniform force is given in a wide range, and accordingly the resin absorbing base material layer 12 impregnated with the curable resin adheres to the inner wall, in the tubular lining material 1. In addition, the tubular lining material 1 is arranged so that the covering layer 11 forms the inner face of the host pipe 9.

It should be noted that the insertion step of the tubular lining material 1 into the host pipe 9 is not limited to inserting while reverting by fluid pressure in this way, but insertion may be allowed by drawing-in to the inside of the host pipe 9 using a tubular lining material installed covering layer 11 at the most inner layer, without reversion. That is, in this case, the tubular lining material 1 is installed with a resin absorbing base material layer 12 at the most outer layer.

Subsequently, as shown in Fig. 6, fluid is heated in a state that the tubular lining material 1 reverted and inserted into the host pipe 9 is pressed onto the inner wall of the host pipe 9, to cure a curable resin impregnated to the resin absorbing base material layer 12 and the reinforced fiber base material layer 13 to perform lining of the inner wall of the host pipe 9 (the curing step). The tubular lining material 1 cured in this way is deployed in matching with a rehabilitation section of the host pipe 9, and the host pipe 9 is restored by the tubular lining material 1. By using a curable resin as described above, reversion work can be performed smoothly and work efficiency can be enhanced, while maintaining suitable flexibility of the tubular lining material 1 provided with the resin absorbing base material layer 12 and the reinforced fiber base material layer 13 sufficiently impregnated with this.

### EXAMPLES

Explanation will be given below in still more detail on the present invention with reference to Examples and Comparative examples, to verify excellence of the present invention and superiority in a constitution of the present invention, however, the present invention should not be limited to these Examples.

It should be noted that evaluation and measurement methods used in Examples and Comparative Examples are as follows.

### [Evaluation methods of a tubular lining material, and a restored rehabilitated underground pipe]

### (1) Moisture content

Moisture content of the furan-based resin was measured in accordance with a quantitative titration method in JIS K0113-8: "A Carl Fisher titration method".

### (2) Viscosity

Viscosity of the curable furan resin composition was measured in accordance with a B-type viscometer method in JIS K7117-1: "A measurement method of apparent viscosity using the Brook Field type rotation viscometer".

### (3) Impregnating ability

Impregnation degree in impregnation of the curable furan resin composition into a base material was observed with visual inspection.

### (4) Flexural modulus

Flexural modulus of a sample cut out from the repaired rehabilitated underground pipe was measured in accordance with JIS K7171: "A determination method of flexural characteristics".

### <Example 1>

Only a furan resin component (a co-condensate of furfuryl alcohol and formaldehyde, having a viscosity of 2700 mPa·s, and a moisture content of 7.4% by weight) was used as a furan-based resin.

Further, after adding 3 parts by weight of a curing agent (a 65% aqueous solution of p-toluene sulfonic acid), relative to 100 parts by weight of the furan-based resin, they were stirred for 10 minutes under 1000 rpm, using "Homodisper", to prepare a curable furan resin composition.

7500 g/m² of this curable furan resin composition was poured inside a base material for tubular lining composed of a tubular laminated body made of resin nonwoven fabric (polyester nonwoven fabric with a porosity of 85% and 460 g/m²) and resin nonwoven fabric (polyester nonwoven fabric with a porosity of 85% and 600 g/m²) coated with a water impermeable layer at the outer surface, then deaerated inside of the base material by depressurizing inside of said base material, and the curable furan resin composition was impregnated into the base material to obtain a tubular lining material with a thickness of 6 mm.

The obtained tubular lining material was mounted on a reversion apparatus on the ground, to insert into an underground pipe with an inner diameter of 200 mm, while reversing the tubular lining material 1 by compressed air. Subsequently, the tubular lining material reversed inserted inside the underground pipe was heated for 4 hours using warm water of 90°C from inside in a pressed state to the inner wall of the underground pipe to cure the curable furan resin composition to obtain a rehabilitated underground pipe. Evaluation results thereof are shown in Table 1.

<Example 2>

After 40 part by weight of furfural was added to 100 part by weight of the furan resin component (a co-condensate of furfuryl alcohol and formaldehyde, having a viscosity of 2700 mPa·s, and a moisture content of 7.4% by weight), it was stirred for 5 minutes under 1000 rpm, using "Homodisper", to prepare a furan-based resin. After that, using this furan-based resin, a rehabilitated underground pipe was obtained by a similar method as in Example 1. Evaluation results thereof are shown in Table 1.

### <Example 3>

After 50 part by weight of furfuryl alcohol was added to 100 part by weight of the furan resin component (a co-condensate of furfuryl alcohol and formaldehyde, having a viscosity of 2700 mPa·s, and a moisture content of 7.4% by weight), it was stirred for 5 minutes under 1000 rpm, using "Homodisper", to prepare a furan-based resin. After that, using this furan-based resin, a rehabilitated underground pipe was obtained by a similar method as in Example 1. Evaluation results thereof are shown in Table 1.

### <Example 4>

After 50 part by weight of furfuryl alcohol was added to 100 part by weight of the furan resin component (a co-condensate of furfuryl alcohol and formaldehyde, having a viscosity of 14000 mPa·s, and a moisture content of 1.3% by weight), it was stirred for 5 minutes under 1000 rpm, using "Homodisper", to prepare a furan-based resin. After that, using this furan-based resin, a rehabilitated underground pipe was obtained by a similar method as in Example 1. Evaluation results thereof are shown in Table 1.

### <Example 5>

After 50 part by weight of furfuryl alcohol was added to 100 part by weight of the furan resin component (a co-condensate of furfuryl alcohol and formaldehyde, having a viscosity of 2700 mPa·s, and a moisture content of 7.4% by weight), it was stirred for 5 minutes under 1000 rpm, using "Homodisper", to prepare a furan-based resin.

Further, after adding 40 parts by weight of inorganic filler kaolin (calcined kaolin, with an average particle diameter of 1.4µm, a pH of 5.5) and 3 parts by weight of a curing agent (a 65% aqueous solution of p-toluene sulfonic acid) to 100 parts by weight of the furan-based resin, it was stirred for 10 minutes under 1000 rpm, using "Homodisper", to prepare a curable furan resin composition. After that, using this furan-based resin, a rehabilitated underground pipe was obtained by a similar method as in Example 1. Evaluation results thereof are shown in Table 1.

### <Example 6>

A rehabilitated underground pipe was obtained by a similar method as in Example 5, except that it was changed to an inorganic filler kaolin (calcined kaolin with an average particle diameter of 1.4µm, a pH of 9.0, aminosilane-based surface-treatment). Evaluation results thereof are shown in Table 1.

### <Example 7>

A rehabilitated underground pipe was obtained by a similar method as in Example 3, except that it was changed to natural fiber nonwoven fabric coated with a water-impermeable layer at the outer surface (flax nonwoven fabric with a porosity of 85%, 460 g/m²) and natural fiber nonwoven fabric coated with a water-impermeable layer at the outer surface (flax nonwoven fabric with a porosity of 85%, 600 g/m²). Evaluation results thereof are shown in Table 1.

### <Comparative Example 1>

As a curable unsaturated polyester resin composition, after adding 1 part by weight of a curing agent (peroxide) to 100 parts by weight of an unsaturated polyester resin (isophthalic acid-based resin, with a viscosity of 1900 mPa·s), it was stirred for 10 minutes under 1000 rpm, using "Homodisper", to prepare a curable unsaturated polyester resin composition. After that, using this curable unsaturated polyester resin composition, a rehabilitated underground pipe was obtained by a similar method as in Example 1. Evaluation results thereof are shown in Table 1.

**[Table 1]**

| Item | | Unit | Example 1 | Example 2 | Example 3 | Example 4 | Example 5 | Example 6 | Example7 | Comparative Example 1 |
|---|---|---|---|---|---|---|---|---|---|---|
| Resin component | Kind | - | Furan-based resin (derived from a natural substance) | | | | | | | Unsaturated polyester |
| | Viscosity | mPa·s | 2,700 | 2,700 | 2,700 | 14,000 | 2,700 | 2,700 | 2,700 | 1,900 |
| | Moisture content | % | 7.4 | 7.4 | 7.4 | 1.3 | 7.4 | 7.4 | 7.4 | - |
| Reactive diluent | Kind | - | - | Furfural | Furfuryl alcohol | | | | | - |
| | Addition amount | parts by weight | - | 40 | 50 | 50 | 50 | 50 | 50 | - |
| Filler | Kind | - | - | - | - | - | Kaolin | Kaolin | - | - |
| | Surface treatment | | - | - | - | - | - | | - | - |
| | Addition amount | parts by weight | - | - | - | - | 40 | 40 | - | - |
| Base material layer | Kind | - | Polyester nonwoven fabric | | | | | | Flax nonwoven fabric | Polyester nonwoven fabric |
| Water content of furan-based resin | | % | 7.4 | 5.6 | 5.2 | 0.8 | 5.2 | 5-2 | 5.2 | - |
| viscosity of curable resin composition | | mPa·s | 2,700 | 200 | 200 | 275 | 910 | 830 | 275 | 1,900 |
| Impregnation property | | - | Good | Very good | Very good | Very good | Good | Good | Very good | Good |
| Flexural Modulus | | Mpa | 2,000 | 2,100 | 2,200 | 2,500 | 2,900 | 3,500 | 2,100 | 2,000 |

From Table 1, it has been understood that Examples (Examples 1 to 7) of the present invention, where a furan-based resin derived from a natural substance was used as the curable resin, have characteristics at least equivalent or better as the lining material for rehabilitating a host pipe, as compared with Comparative Example, where the curable resin derived from petroleum was used.

In particular, it has been understood that, in Examples 2 to 4, both low viscosity and impregnating ability have been attained, while maintaining strength characteristics, even in the furan-based resin having low moisture content, in addition, in Examples 5 and 6, securing of impregnating ability has been attained while maintaining low viscosity, even in enhancement of strength characteristics by high amount of filling an inorganic filler.

On the other hand, it has been understood that, in Example 7, the lining material for rehabilitating a host pipe composed of a non-petroleum-based material has been provided for a base material too.

### INDUSTRIAL APPLICABILITY

As is clear from the above, the lining material for rehabilitating a host pipe of the present invention is suitable as the lining material for rehabilitating a host pipe for rehabilitating the inner circumference face of various host pipes, for example, underground pipes such as sewer, water supply, agriculture water pipe, gas pipe buried in the ground, because of having low viscosity and very good impregnating property, in spite of low moisture content.

Accordingly, industrial applicability, which the rehabilitation method of host pipe of the present invention, using the lining material having such desirable characteristics, is extremely high.

### REFERENCE SIGNS LIST

- 1: Lining material
- 11: Covering layer
- 12: Resin absorbing base material layer
- 13: Reinforced fiber base material layer
- 4: Reversion apparatus
- 9: Host pipe

## Claims

1. A lining material (1) for rehabilitating a host pipe, (9) which comprises:
(i) a resin absorbing base material;
(ii) a liquid-tight film coating formed on one surface of said base material (i); and
(iii)a curable furan resin composition impregnated to said base material (i), wherein said curable furan resin composition comprises a furan-based resin and a curing agent and has a viscosity of 50 to 3000 mPa·s and a moisture content of the furan-based resin of 10% by weight or lower.

2. The lining material for rehabilitating a host pipe according to claim 1, which further comprises:
(iv) another resin absorbing base material; and
(v) a reinforcing fiber base material,
wherein said reinforcing fiber base material (v) is interposed between said resin absorbing base materials (i) and (iv), and
wherein said curable furan resin composition (iii) is impregnated also to said base materials (iv) and (v).

3. The lining material for rehabilitating a host pipe according to claim 1 or 2, **characterized in that** the furan-based resin is at least one furan resin component selected from the group consisting of a furan resin, epoxy-modified furan resin, phenol-modified furan resin, aldehyde-modified furan resin, urea-modified furan resin and melamine-modified furan resin.

4. The lining material for rehabilitating a host pipe according to claim 3, **characterized in that** said furan-based resin contains a reactive diluent, in addition to the furan resin component.

5. The lining material for rehabilitating a host pipe according to claim 4, **characterized in that** the reactive diluent is furfuryl alcohol and/or furfural.

6. The lining material for rehabilitating a host pipe according to claim 4 or 5, **characterized in that** the reactive diluent is contained in 10 to 100 parts by weight, relative to 100 parts by weight of the furan resin component.

7. The lining material for rehabilitating a host pipe according to any one of claims 1 to 6, **characterized in that** said curable furan resin composition (iii) contains an inorganic filler.

8. The lining material for rehabilitating a host pipe according to claim 7, **characterized in that** pH of the inorganic filler is 10 or lower.

9. The lining material for rehabilitating a host pipe according to claim 7 or 8, **characterized in that** the inorganic filler has been subjected to organosilane-based surface treatment.

10. The lining material for rehabilitating a host pipe according to any one of claims 1 to 9, **characterized in that** said resin absorbing base material (i) is made of natural fiber.

11. The lining material for rehabilitating a host pipe according to any one of claims 2 to 9, **characterized in that** said base material (iv) and/or (v) is made of natural fiber.

12. A method for rehabilitating a host pipe by inserting a tubular lining material (1) into a host pipe (9), and by rehabilitating the inner wall of a host pipe,
said tubular lining material comprising:
(i) a resin absorbing base material; and
(ii) a liquid-tight film coating formed on one surface of said base material (i),
the method comprising:
(a) pouring and impregnating, to said base material (i), a curable furan resin composition (iii) having a viscosity of 50 to 3000 mPa·s and comprising a furan-based resin having a moisture content of 10% by weight or lower and a curing agent to thereby obtain an impregnated tubular lining material;
(b) inserting while reversing the impregnated tubular lining material into the host pipe by fluid pressure; and
(c) coating the inner wall of the host pipe by curing said curable furan resin composition (iii), in a state of pressing the inserted tubular lining material to the inner wall of the host pipe.

13. A method for rehabilitating a host pipe by inserting a tubular lining material (1) into a host pipe (9), and by rehabilitating the inner wall of a host pipe,
said tubular lining material comprising:
(i) a resin absorbing base material; and
(ii) a liquid-tight film coating formed on one surface of said base material (i),
the method comprising:
(a) pouring and impregnating, to said base material (i), a curable furan resin composition (iii) having a viscosity of 50 to 3000 mPa·s and comprising a furan-based resin having a moisture content of 10% by weight or lower and a curing agent to thereby obtain an impregnated tubular lining material;
(b) drawing-in and inserting the impregnated tubular lining material into a host pipe; and
(c) coating the inner wall of the host pipe by curing said curable furan resin composition (iii), in a state of pressing the inserted tubular lining material to the inner wall of the host pipe.

14. The method according to claim 12 or 13, **characterized in that** the tubular lining material further comprises:
(iv) another resin absorbing base material; and
(v) a reinforcing fiber base material,
said reinforcing fiber base material (v) being interposed between said resin absorbing base materials (i) and (iv), and
in step (a), said curable furan resin composition (iii) is poured and impregnated also to said base materials (iv) and (v).

15. The method for rehabilitating a host pipe according to any one of claims 12 to 14, **characterized in that** the furan-based resin is at least one furan resin component selected from the group consisting of a furan resin, epoxy-modified furan resin, phenol-modified furan resin, aldehyde-modified furan resin, urea-modified furan resin and melamine-modified furan resin.

16. The method for rehabilitating a host pipe according to claim 15, **characterized in that** said furan-based resin contains a reactive diluent, in addition to the furan resin component.

17. The method for rehabilitating a host pipe according to claim 16, **characterized in that** the reactive diluent is furfuryl alcohol and/or furfural.

18. The method for rehabilitating a host pipe according to claim 16 or 17, **characterized in that** the reactive diluents is contained in 10 to 100 parts by weight, relative to 100 parts by weight of the furan resin component.

19. The method for rehabilitating a host pipe according to any one of claims 12 to 18, **characterized in that** said curable furan resin composition (iii) contains an inorganic filler.

20. The method for rehabilitating a host pipe according to claim 19, **characterized in that** pH of the inorganic filler is 10 or lower.

21. The method for rehabilitating a host pipe according to claim 19 or 20, **characterized in that** the inorganic filler has been subjected to organosilane-based surface treatment.

22. The method for rehabilitating a host pipe according to any one of claims 12 to 21, **characterized in that** said resin absorbing base material (i) is made of natural fiber.

23. The method for rehabilitating a host pipe according to any one of claims 13 to 21, **characterized in that** said base material (iv) and/or (v) is made of natural fiber.

## Patentansprüche

1. Auskleidungsmaterial (1) zur Sanierung einer bestehenden Röhre, umfassend:
(i) ein harzabsorbierendes Basismaterial;
(ii) eine flüssigkeitsdichte Filmbeschichtung, die auf einer Oberfläche des Basismaterials (i) gebildet ist; und
(iii) eine härtbare Furanharzzusammensetzung, mit der das Basismaterial (i) imprägniert ist, worin die härtbare Furanharzzusammensetzung ein Harz auf Furanbasis und ein Härtungsmittel umfasst und eine Viskosität von 50 bis 3.000 mPa·s sowie einen Feuchtigkeitsgehalt des Harzes auf Furanbasis von 10 Gew.% oder weniger aufweist.

2. Auskleidungsmaterial zur Sanierung einer bestehenden Röhre gemäß Anspruch 1, das weiterhin umfasst:
(iv) ein weiteres harzabsorbierendes Basismaterial; und
(v) ein Verstärkungsfaser-Basismaterial,
worin das Verstärkungsfaser-Basismaterial (v) zwischen die harzabsorbierenden Basismaterialien (i) und (iv) eingebracht ist, und
worin auch die Basismaterialien (iv) und (v) mit der härtbaren Furanharzzusammensetzung (iii) imprägniert sind.

3. Auskleidungsmaterial zur Sanierung einer bestehenden Röhre gemäß Anspruch 1 oder 2, **dadurch gekennzeichnet, dass** das Harz auf Furanbasis mindestens eine Furan-Harzkomponente ausgewählt aus der Gruppe bestehend aus einem Furanharz, Epoxy-modifiziertem Furanharz, Phenol-modifiziertem Furanharz, Aldehyd-modifiziertem Furanharz, Harnstoff-modifiziertem Furanharz und Melamin-modifiziertem Furanharz ist.

4. Auskleidungsmaterial zur Sanierung einer bestehenden Röhre gemäß Anspruch 3, **dadurch gekennzeichnet, dass** das Harz auf Furanbasis ein reaktives Verdünnungsmittel zusätzlich zur Furan-Harzkomponente enthält.

5. Auskleidungsmaterial zur Sanierung einer bestehenden Röhre gemäß Anspruch 4, **dadurch gekennzeichnet, dass** das reaktive Verdünnungsmittel Furfurylalkohol und/oder Furfural ist.

6. Auskleidungsmaterial zur Sanierung einer bestehenden Röhre gemäß Anspruch 4 oder 5, **dadurch gekennzeichnet, dass** das reaktive Verdünnungsmittel zu 10 bis 100 Gew.-Teilen relativ zu 100 Gew.-Teilen der Furanharzkomponente enthalten ist.

7. Auskleidungsmaterial zur Sanierung einer bestehenden Röhre gemäß irgendeinem der Ansprüche 1 bis 6, **dadurch gekennzeichnet, dass** die härtbare Furanharzzusammensetzung (iii) einen anorganischen Füllstoff enthält.

8. Auskleidungsmaterial zur Sanierung einer bestehenden Röhre gemäß Anspruch 7, **dadurch gekennzeichnet, dass** der pH-Wert des anorganischen Füllstoffs 10 oder niedriger ist.

9. Auskleidungsmaterial zur Sanierung einer bestehenden Röhre gemäß Anspruch 7 oder 8, **dadurch gekennzeichnet, dass** der anorganische Füllstoff einer Oberflächenbehandlung auf Organosilanbasis unterzogen wurde.

10. Auskleidungsmaterial zur Sanierung einer bestehenden Röhre gemäß irgendeinem der Ansprüche 1 bis 9, **dadurch gekennzeichnet, dass** das harzabsorbierende Basismaterial (i) aus natürlichen Fasern hergestellt ist.

11. Auskleidungsmaterial zur Sanierung einer bestehenden Röhre gemäß irgendeinem der Ansprüche 2 bis 9, **dadurch gekennzeichnet, dass** das Basismaterial (iv) und/oder (v) aus natürlichen Fasern hergestellt ist.

12. Verfahren zur Sanierung einer bestehenden Röhre durch Einführen eines röhrenförmigen Auskleidungsmaterials (1) in eine bestehende Röhre (9) und durch Sanieren der Innenwand der bestehenden Röhre, wobei das röhrenförmige Auskleidungsmaterial umfasst:
(i) ein harzabsorbierendes Basismaterial; und
(ii) eine flüssigkeitsdichte Filmbeschichtung, die auf einer Oberfläche des Basismaterials (i) gebildet ist,
wobei das Verfahren umfasst:
(a) Gießen und Imprägnieren einer härtbaren Furanharzzusammensetzung (iii) auf das Basismaterial (i), die eine Viskosität von 50 bis 3.000 mPa·s aufweist und ein Harz auf Furanbasis mit einem Feuchtigkeitsgehalt von 10 Gew.% oder niedriger und ein Härtungsmittel umfasst, um dadurch ein imprägniertes röhrenförmiges Auskleidungsmaterial zu erhalten;
(b) Einführen des imprägnierten röhrenförmigen Auskleidungsmaterials unter Umkehrung in die bestehende Röhre durch Flüssigkeitsdruck; und
(c) Beschichten der Innenwand der bestehenden Röhre durch Härten der härtbaren Furanharzzusammensetzung (iii) in einem Zustand, in dem das eingeführte röhrenförmige Auskleidungsmaterial an die Innenwand der bestehenden Röhre gepresst wird.

13. Verfahren zur Sanierung einer bestehenden Röhre durch Einführen eines röhrenförmigen Auskleidungsmaterials (1) in eine bestehende Röhre (9) und durch Sanieren der Innenwand der bestehenden Röhre, wobei das röhrenförmige Auskleidungsmaterial umfasst:
(i) ein harzabsorbierendes Basismaterial; und
(ii) eine flüssigkeitsdichte Filmbeschichtung, die auf einer Oberfläche des Basismaterials (i) gebildet ist,
wobei das Verfahren umfasst:
(a) Gießen und Imprägnieren einer härtbaren Furanharzzusammensetzung (iii) auf das Basismaterial (i), die eine Viskosität von 50 bis 3.000 mPa·s aufweist und ein Harz auf Furanbasis mit einem Feuchtigkeitsgehalt von 10 Gew.% oder niedriger und ein Härtungsmittel umfasst, um dadurch ein imprägniertes röhrenförmiges Auskleidungsmaterial zu erhalten;
(b) Hineinziehen und Einführen des imprägnierten röhrenförmigen Auskleidungsmaterials in die bestehende Röhre; und
(c) Beschichten der Innenwand der bestehenden Röhre durch Härten der härtbaren Furanharzzusammensetzung (iii) in einem Zustand, in dem das eingeführte röhrenförmige Auskleidungsmaterial an die Innenwand der bestehenden Röhre gepresst wird.

14. Verfahren gemäß Anspruch 12 oder 13, **dadurch gekennzeichnet, dass** das röhrenförmige Auskleidungsmaterial weiterhin umfasst:
(iv) ein weiteres harzabsorbierendes Basismaterial; und
(v) ein Verstärkungsfaser-Basismaterial,
wobei das Verstärkungsfaser-Basismaterial (v) zwischen die harzabsorbierenden Basismaterialien (i) und (iv) eingebracht ist, und
worin in Schritt (a) die härtbare Furanharzzusammensetzung (iii) auch auf die Basismaterialien (iv) und (v) gegossen und imprägniert wird.

15. Verfahren zur Sanierung einer bestehenden Röhre gemäß irgendeinem der Ansprüche 12 bis 14, **dadurch gekennzeichnet, dass** das Harz auf Furanbasis mindestens eine Furan-Harzkomponente ausgewählt aus der Gruppe bestehend aus einem Furanharz, Epoxy-modifiziertem Furanharz, Phenol-modifiziertem Furanharz, Aldehyd-modifiziertem Furanharz, Harnstoff-modifiziertem Furanharz und Melamin-modifiziertem Furanharz ist.

16. Verfahren zur Sanierung einer bestehenden Röhre gemäß Anspruch 15, **dadurch gekennzeichnet, dass** das Harz auf Furanbasis ein reaktives Verdünnungsmittel zusätzlich zur Furan-Harzkomponente enthält.

17. Verfahren zur Sanierung einer bestehenden Röhre gemäß Anspruch 16, **dadurch gekennzeichnet, dass** das reaktive Verdünnungsmittel Furfurylalkohol und/oder Furfural ist.

18. Verfahren zur Sanierung einer bestehenden Röhre gemäß Anspruch 16 oder 17, **dadurch gekennzeichnet, dass** das reaktive Verdünnungsmittel zu 10 bis 100 Gew.-Teilen relativ zu 100 Gew.-Teilen der Furanharzkomponente enthalten ist.

19. Verfahren zur Sanierung einer bestehenden Röhre gemäß irgendeinem der Ansprüche 12 bis 18, **dadurch gekennzeichnet, dass** die härtbare Furanharzzusammensetzung (iii) einen anorganischen Füllstoff enthält.

20. Verfahren zur Sanierung einer bestehenden Röhre gemäß Anspruch 19, **dadurch gekennzeichnet, dass** der pH-Wert des anorganischen Füllstoffs 10 oder niedriger ist.

21. Verfahren zur Sanierung einer bestehenden Röhre gemäß Anspruch 19 oder 20, **dadurch gekennzeichnet, dass** der anorganische Füllstoff einer Oberflächenbehandlung auf Organosilanbasis unterzogen wurde.

22. Verfahren zur Sanierung einer bestehenden Röhre gemäß irgendeinem der Ansprüche 12 bis 21, **dadurch gekennzeichnet, dass** das harzabsorbierende Basismaterial (i) aus natürlichen Fasern hergestellt ist.

23. Verfahren zur Sanierung einer bestehenden Röhre gemäß irgendeinem der Ansprüche 13 bis 21, **dadurch gekennzeichnet, dass** das Basismaterial (iv) und/oder (v) aus natürlichen Fasern hergestellt ist.

## Revendications

1. Matériau d'enrobage (1) permettant de réhabiliter un tuyau hôte (9) qui comprend :
(i) un matériau de base absorbant la résine ;
(ii) un revêtement en film étanche aux liquides formé sur une surface dudit matériau de base (i) ; et
(iii) une composition de résine furannique durcissable imprégnée sur ledit matériau de base (i), où ladite composition de résine furannique durcissable comprend une résine à base de furanne et un agent de durcissement et a une viscosité allant de 50 à 3000 mPa.s et une teneur en humidité de la résine à base de furanne inférieure ou égale à 10% en poids.

2. Matériau d'enrobage permettant de réhabiliter un tuyau hôte selon la revendication 1, qui comprend en outre :
(iv) un autre matériau de base absorbant la résine ; et
(v) un matériau de base à fibres de renforcement,
dans lequel ledit matériau de base à fibres de renforcement (v) est interposé entre lesdits matériaux de base absorbant la résine (i) et (iv), et
dans lequel ladite composition de résine furannique durcissable (iii) est imprégnée également sur lesdits matériaux de base (iv) et (v).

3. Matériau d'enrobage permettant de réhabiliter un tuyau hôte selon la revendication 1 ou 2, **caractérisé en ce que** la résine à base de furanne est au moins un composant de résine furannique choisi dans le groupe constitué d'une résine furannique, d'une résine furannique modifiée par un époxy, d'une résine furannique modifiée par un phénol, d'une résine furannique modifiée par un aldéhyde, d'une résine furannique modifiée par de l'urée et d'une résine furannique modifiée par une mélamine.

4. Matériau d'enrobage permettant de réhabiliter un tuyau hôte selon la revendication 3, **caractérisé en ce que** ladite résine à base de furanne contient un diluant réactif, en plus du composant de résine furannique.

5. Matériau d'enrobage permettant de réhabiliter un tuyau hôte selon la revendication 4, **caractérisé en ce que** le diluant réactif est de l'alcool furfurylique et/ou du furfural.

6. Matériau d'enrobage permettant de réhabiliter un tuyau hôte selon la revendication 4 ou 5, **caractérisé en ce que** le diluant réactif est présent en une quantité allant de 10 à 100 parties en poids, par rapport à 100 parties en poids du composant de résine furannique.

7. Matériau d'enrobage permettant de réhabiliter un tuyau hôte selon l'une quelconque des revendications 1 à 6, **caractérisé en ce que** ladite composition de résine furannique durcissable (iii) contient une charge inorganique.

8. Matériau d'enrobage permettant de réhabiliter un tuyau hôte selon la revendication 7, **caractérisé en ce que** le pH de la charge inorganique est inférieur ou égal à 10.

9. Matériau d'enrobage permettant de réhabiliter un tuyau hôte selon la revendication 7 ou 8, **caractérisé en ce que** la charge inorganique a été soumise à un traitement de surface à base d'organosilane.

10. Matériau d'enrobage permettant de réhabiliter un tuyau hôte selon l'une quelconque des revendications 1 à 9, **caractérisé en ce que** ledit matériau de base absorbant la résine (i) est réalisé en fibres naturelles.

11. Matériau d'enrobage permettant de réhabiliter un tuyau hôte selon l'une quelconque des revendications 2 à 9, **caractérisé en ce que** ledit matériau de base (iv) et/ou (v) est réalisé en fibres naturelles.

12. Procédé permettant de réhabiliter un tuyau hôte en insérant un matériau d'enrobage tubulaire (1) dans un tuyau hôte (9), et en réhabilitant la paroi interne d'un tuyau hôte,
ledit matériau d'enrobage tubulaire comprenant :
(i) un matériau de base absorbant la résine ; et
(ii) un revêtement en film étanche aux liquides formé sur une surface dudit matériau de base (i),
le procédé comprenant le fait :
(a) de verser et d'imprégner sur ledit matériau de base (i), une composition de résine furannique durcissable (iii) ayant une viscosité allant de 50 à 3000 mPa.s et comprenant une résine à base de furanne ayant une teneur en humidité inférieure ou égale à 10% en poids et un agent de durcissement pour obtenir ainsi un matériau d'enrobage tubulaire imprégné ;
(b) d'insérer tout en inversant le matériau d'enrobage tubulaire imprégné dans le tuyau hôte par une pression de fluide ; et
(c) de revêtir la paroi interne du tuyau hôte par durcissement de ladite composition de résine furannique durcissable (iii), dans un état de pression du matériau d'enrobage tubulaire inséré sur la paroi interne du tuyau hôte.

13. Procédé permettant de réhabiliter un tuyau hôte en insérant un matériau d'enrobage tubulaire (1) dans un tuyau hôte (9), et en réhabilitant la paroi interne d'un tuyau hôte,
ledit matériau d'enrobage tubulaire comprenant :
(i) un matériau de base absorbant la résine ; et
(ii) un revêtement en film étanche aux liquides formé sur une surface dudit matériau de base (i),
le procédé comprenant le fait :
(a) de verser et d'imprégner, sur ledit matériau de base (i), une composition de résine furannique durcissable (iii) ayant une viscosité allant de 50 à 3000 mPa.s et comprenant une résine à base de furanne ayant une teneur en humidité inférieure ou égale à 10% en poids et un agent de durcissement pour obtenir ainsi un matériau d'enrobage tubulaire imprégné ;
(b) d'introduire et d'insérer le matériau d'enrobage tubulaire imprégné dans un tuyau hôte ; et
(c) de revêtir la paroi interne du tuyau hôte par durcissement de ladite composition de résine furannique durcissable (iii), dans un état de pression du matériau d'enrobage tubulaire inséré sur la paroi interne du tuyau hôte.

14. Procédé selon la revendication 12 ou 13, **caractérisé en ce que** le matériau d'enrobage tubulaire comprend en outre :
(iv) un autre matériau de base absorbant la résine ; et
(v) un matériau de base à fibres de renforcement, ledit matériau de base à fibres de renforcement (v) étant interposé entre lesdits matériaux de base absorbant la résine (i) et (iv), et
dans l'étape (a), ladite composition de résine furannique durcissable (iii) est également versée et imprégnée sur lesdits matériaux de base (iv) et (v).

15. Procédé permettant de réhabiliter un tuyau hôte selon l'une quelconque des revendications 12 à 14, **caractérisé en ce que** la résine à base de furanne est au moins un composant de résine furannique choisi dans le groupe constitué d'une résine furannique, d'une résine furannique modifiée par un époxy, d'une résine furannique modifiée par un phénol, d'une résine furannique modifiée par un aldéhyde, d'une résine furannique modifiée par de l'urée et d'une résine furannique modifiée par une mélamine.

16. Procédé permettant de réhabiliter un tuyau hôte selon la revendication 15, **caractérisé en ce que** ladite résine à base de furanne contient un diluant réactif, en plus du compostant de résine furannique.

17. Procédé permettant de réhabiliter un tuyau hôte selon la revendication 16, **caractérisé en ce que** le diluant réactif est de l'alcool furfurylique et/ou du furfural.

18. Procédé permettant de réhabiliter un tuyau hôte selon la revendication 16 ou 17, **caractérisé en ce que** le diluant réactif est présent en une quantité allant de 10 à 100 parties en poids, par rapport à 100 parties en poids du composant de résine furannique.

19. Procédé permettant de réhabiliter un tuyau hôte selon l'une quelconque des revendications 12 à 18, **caractérisé en ce que** ladite composition de résine furannique durcissable (iii) contient une charge inorganique.

20. Procédé permettant de réhabiliter un tuyau hôte selon la revendication 19, **caractérisé en ce que** le pH de la charge inorganique est inférieur ou égal à 10.

21. Procédé permettant de réhabiliter un tuyau hôte selon la revendication 19 ou 20, **caractérisé en ce que** la charge inorganique a été soumise à un traitement de surface à base d'organosilane.

22. Procédé permettant de réhabiliter un tuyau hôte selon l'une quelconque des revendications 12 à 21, **caractérisé en ce que** ledit matériau de base absorbant la résine (i) est réalisé en fibres naturelles.

23. Procédé permettant de réhabiliter un tuyau hôte selon l'une quelconque des revendications 13 à 21, **caractérisé en ce que** ledit matériau de base (iv) et/ou (v) est réalisé en fibres naturelles.
